(19) **Europäisches Patentamt / European Patent Office / Office européen des brevets**

(11) **EP 4 344 122 A1**

(12) # EUROPEAN PATENT APPLICATION

(43) Date of publication:
**27.03.2024 Bulletin 2024/13**

(21) Application number: **23198828.8**

(22) Date of filing: **21.09.2023**

(51) International Patent Classification (IPC):
**H04L 9/00** $^{(2022.01)}$      **H04L 9/30** $^{(2006.01)}$
**H04L 9/32** $^{(2006.01)}$

(52) Cooperative Patent Classification (CPC):
**H04L 9/003; H04L 9/3093; H04L 9/3247;**
H04L 2209/046; H04L 2209/30; H04L 2209/34

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **26.09.2022 US 202217935550**

(71) Applicant: **NXP B.V.**
**5656 AG Eindhoven (NL)**

(72) Inventors:
• **Azouaoui, Melissa**
**5656AG Eindhoven (NL)**

• **Kuzovkova, Yulia**
**5656AG Eindhoven (NL)**
• **Schneider, Tobias**
**5656AG Eindhoven (NL)**
• **Schoenauer, Markus**
**5656AG Eindhoven (NL)**
• **van Vredendaal, Christine**
**5656AG Eindhoven (NL)**

(74) Representative: **Krott, Michel**
**NXP Semiconductors**
**Intellectual Property Group**
**High Tech Campus 60**
**5656 AG Eindhoven (NL)**

(54) **PROTECTING POLYNOMIAL REJECTION THROUGH MASKED COMPRESSED COMPARISON**

(57) Various embodiments relate to a data processing system comprising instructions embodied in a non-transitory computer readable medium, the instructions for a cryptographic operation using masked compressing of coefficients of a polynomial having $n_s$ arithmetic shares for lattice-based cryptography in a processor, the instructions, including: shifting a first arithmetic share of the $n_s$ arithmetic shares by an input mask $\lambda_1$; scaling the shifted first arithmetic share by a value based on a first compression factor $\delta$ and a masking scaling factor $\varphi_1$; shifting the scaled first arithmetic share by a value based on the masking scaling factor $\varphi_1$; scaling a second to $n_s$ shares of the $n_s$ arithmetic shares by a value based on the first compression factor $\delta$ and the masking scaling factor $\varphi_1$; converting the $n_s$ scaled arithmetic shares to $n_s$ Boolean shares; right shifting the $n_s$ Boolean shares based upon the masking scaling factor $\varphi_1$ and a second compression factor $\varphi_2$; XORing an output mask $\lambda_2$ with the shifted first Boolean share to produce $n_s$ compressed Boolean shares; and carrying out a cryptographic operation using the $n_s$ arithmetic shares when the $n_s$ compressed Boolean shares indicates that the coefficients of the polynomial are within boundary values.

FIG. 1

EP 4 344 122 A1

**Description**

**TECHNICAL FIELD**

Various exemplary embodiments disclosed herein relate generally to efficiently protecting polynomial rejection through masked compressed comparison.

**BACKGROUND**

Recent significant advances in quantum computing have accelerated the research into post-quantum cryptography schemes: cryptographic algorithms which run on classical computers but are believed to be still secure even when faced with an adversary with access to a quantum computer. This demand is driven by interest from standardization bodies, such as the call for proposals for new public-key cryptography standards by the National Institute of Standards and Technology (NIST). The selection procedure for this new cryptographic standard has started and has further accelerated the research of post-quantum cryptography schemes.

There are various families of problems to instantiate these post-quantum cryptographic approaches. Constructions based on the hardness of lattice problems are considered to be promising candidates to become the next standard. A subset of approaches considered within this family are instantiations of the Learning With Errors (LWE) framework: the Ring-Learning With Errors problem. One of the leading lattice-based signature schemes is Dilithium which requires operations involving arithmetic with polynomials with integer coefficients. When implemented, the main computationally expensive operations are the arithmetic with polynomials. More precisely, computations are done in a ring

$$R_q = (\mathbb{Z}/q\mathbb{Z})[X]/(F)$$ : the ring where polynomial coefficients are in $\mathbb{Z}/q\mathbb{Z}$ and the polynomial arithmetic is performed modulo a polynomial F.

**SUMMARY**

A summary of various exemplary embodiments is presented below. Some simplifications and omissions may be made in the following summary, which is intended to highlight and introduce some aspects of the various exemplary embodiments, but not to limit the scope of the invention. Detailed descriptions of an exemplary embodiment adequate to allow those of ordinary skill in the art to make and use the inventive concepts will follow in later sections.

Various embodiments relate to a data processing system including instructions embodied in a non-transitory computer readable medium, the instructions for a cryptographic operation using masked compressing of coefficients of a polynomial having $n_s$ arithmetic shares for lattice-based cryptography in a processor, the instructions, including: shifting a first arithmetic share of the $n_s$ arithmetic shares by an input mask $\lambda_1$; scaling the shifted first arithmetic share by a value based on a first compression factor $\delta$ and a masking scaling factor $\varphi_1$; shifting the scaled first arithmetic share by a value based on the masking scaling factor $\varphi_1$; scaling a second to $n_s$ shares of the $n_s$ arithmetic shares by a value based on the first compression factor $\delta$ and the masking scaling factor $\varphi_1$; converting the $n_s$ scaled arithmetic shares to $n_s$ Boolean shares; right shifting the $n_s$ Boolean shares based upon the masking scaling factor $\varphi_1$ and a second compression factor $\varphi_2$; XORing an output mask $\lambda_2$ with the shifted first Boolean share to produce $n_s$ compressed Boolean shares; and carrying out a cryptographic operation using the $n_s$ arithmetic shares when the $n_s$ compressed Boolean shares indicates that the coefficients of the polynomial are within boundary values. The data processing system represents a solution to the problem of how to enable a significantly more efficient implementation of a masked polynomial rejection.

Various embodiments are described, further including performing a masked comparison function on the $n_s$ compressed Boolean shares configured to indicate that the coefficients of the polynomial are within boundary values.

Various embodiments are described, wherein the compressed polynomial coefficients corresponding to the $n_s$ compressed Boolean shares having a value in a valid range of values have a value of 0, and the masked comparison function compares the $n_s$ compressed Boolean shares to 0.

Various embodiments are described, wherein shifting a first arithmetic share of the $n_s$ arithmetic shares by an input mask $\lambda_1$ includes calculating $a^{(0)}{}_A = a^{(0)}{}_A + \lambda_1 \bmod q$, where $a^{(0)}{}_A$ is the first arithmetic share of the $n_s$ arithmetic shares and $q$ is a prime modulus.

Various embodiments are described, wherein scaling the shifted first arithmetic share by a value based on a first compression factor $\delta$ and a masking scaling factor $\varphi_1$ and shifting the scaled first arithmetic share by a value based on a masking scaling factor $\varphi_1$ includes calculating $a^{(0)}{}_A = \left( \left\lfloor \frac{2^{\varphi_1 \cdot \delta}}{q} \cdot a^{(0)A} \right\rfloor + 2^{\varphi_1 - 1} \right) \bmod 2^{\varphi_1}\delta$ .

Various embodiments are described, wherein scaling second to $n_s$ shares of the $n_s$ shares by a value based on the first compression factor $\delta$ and the masking scaling factor $\varphi_1$ includes calculating

$$a^{(i)_A} = \lfloor \frac{2^{\varphi_1 \cdot \delta}}{q} \cdot a^{(i)_A} \rceil \bmod 2^{\varphi_1}\delta$$

where $a^{(i)}{}_A$ is the ith arithmetic share of the $n_s$ arithmetic shares.

Various embodiments are described, wherein right shifting the $n_s$ Boolean shares based upon the masking scaling factor $\varphi_1$ and a second compression factor $\varphi_2$ includes calculating: $\overline{a}^{(\cdot)}{}_B = \overline{a}^{(\cdot)}{}_B \gg (\varphi_1 + \varphi_2)$, where $\overline{a}^{(\cdot)}{}_B$ is the $n_s$ Boolean shares.

Various embodiments are described, wherein XORing an output mask $\lambda_2$ to the shifted first Boolean share to produce $n_s$ compressed Boolean shares includes calculating: $\overline{a}^{(0)}{}_B = \overline{a}^{(0)}{}_B \oplus \lambda_2$.

Further various embodiments relate to a data processing system including instructions embodied in a non-transitory computer readable medium, the instructions for a cryptographic operation using a masked rejection of a polynomial with coefficients having $n_s$ arithmetic shares for lattice-based cryptography in a processor, the instructions, including: generating a $n_s$ arithmetic shares for each coefficient of the polynomial; performing a masked compression of each coefficient of the polynomial using the $n_s$ arithmetic shares for each coefficient of the polynomial, including: shifting a first arithmetic share of the $n_s$ arithmetic shares by an input mask $\lambda_1$; scaling the shifted first arithmetic share by a value based on a first compression factor $\delta$ and a masking scaling factor $\varphi_1$; shifting the scaled first arithmetic share by a value based on the masking scaling factor $\varphi_1$; scaling the second to $n_s$ shares of the $n_s$ arithmetic shares by a value based on the first compression factor $\delta$ and the masking scaling factor $\varphi_1$; converting the $n_s$ scaled arithmetic shares to Boolean shares; right shifting the $n_s$ Boolean shares based upon the masking scaling factor $\varphi_1$ and a second compression factor $\varphi_2$; and XORing an output mask $\lambda_2$ to the shifted first Boolean share to produce $n_s$ compressed Boolean shares, wherein the compressed $n_s$ Boolean shares indicate compressed polynomial coefficients having a predetermined value when the polynomial coefficients are within boundary values; comparing the polynomial coefficients represented by the $n_s$ compressed Boolean shares to the predetermined value; and carrying out a cryptographic operation using the $n_s$ arithmetic shares when the polynomial coefficients represented by the $n_s$ compressed shares are equal to the predetermined value. The data processing system represents an alternative solution to the problem of how to enable a significantly more efficient implementation of a masked polynomial rejection.

Various embodiments are described, wherein the predetermined value is 0.

Various embodiments are described, wherein shifting a first arithmetic share of the $n_s$ arithmetic shares by an input mask $\lambda_1$ includes calculating $a^{(0)}{}_A = a^{(0)}{}_A + \lambda_1 \bmod q$, where $a^{(0)}{}_A$ is the first arithmetic share of the $n_s$ arithmetic shares and q is a prime modulus, scaling the shifted first arithmetic share by a value based on a first compression factor $\delta$ and a masking scaling factor $\varphi_1$ and shifting the scaled first arithmetic share by a value based on the masking scaling

$$a^{(0)_A} = \left( \lfloor \frac{2^{\varphi_1 \cdot \delta}}{q} \cdot a^{(0)_A} \rceil + 2^{\varphi_1 - 1} \right) \bmod 2^{\varphi_1}\delta$$

factor $\varphi_1$ includes calculating , scaling second to $n_s$ shares of the $n_s$ arithmetic shares by a value based on the first compression factor $\delta$ and the masking scaling factor $\varphi_1$ includes

$$a^{(i)_A} = \lfloor \frac{2^{\varphi_1 \cdot \delta}}{q} \cdot a^{(i)_A} \rceil \bmod 2^{\varphi_1}\delta$$

calculating where $a^{(i)}{}_A$ is the ith arithmetic share of the $n_s$ arithmetic shares, right shifting the $n_s$ Boolean shares based upon the masking scaling factor $\varphi_1$ and a second compression factor $\varphi_2$ includes calculating: $\overline{a}^{(\cdot)}{}_B = \overline{a}^{(\cdot)}{}_B \gg (\varphi_1 + \varphi_2)$, where $\overline{a}^{(\cdot)}{}_B$ is the $n_s$ Boolean shares, and XORing an output mask $\lambda_2$ to the shifted first Boolean share to produce $n_s$ compressed Boolean shares includes calculating: $\overline{a}^{(0)}{}_B = \overline{a}^{(0)}{}_B \oplus \lambda_2$.

Further various embodiments relate to a method for a cryptographic operation using masked compressing of coefficients of a polynomial having $n_s$ arithmetic shares for lattice-based cryptography, including: shifting a first arithmetic share of the $n_s$ arithmetic shares by an input mask $\lambda_1$; scaling the shifted first arithmetic share by a value based on a first compression factor $\delta$ and a masking scaling factor $\varphi_1$; shifting the scaled first arithmetic share by a value based on the masking scaling factor $\varphi_1$; scaling a second to $n_s$ shares of the $n_s$ arithmetic shares by a value based on the first compression factor $\delta$ and the masking scaling factor $\varphi_1$; converting the $n_s$ scaled arithmetic shares to $n_s$ Boolean shares; right shifting the $n_s$ Boolean shares based upon the masking scaling factor $\varphi_1$ and a second compression factor $\varphi_2$; XORing an output mask $\lambda_2$ to the shifted first Boolean share to produce $n_s$ compressed Boolean shares; and carrying out a cryptographic operation using the $n_s$ arithmetic shares when the $n_s$ compressed Boolean shares indicates that the coefficients of the polynomial are within boundary values.

Various embodiments are described, further including performing a masked comparison function on the $n_s$ compressed Boolean shares configured to indicate that the coefficients of the polynomial are within boundary values.

Various embodiments are described, wherein the compressed polynomial coefficients corresponding to the $n_s$ compressed Boolean shares having a value in a valid range of values have a value of 0, and the masked comparison

function compares the $n_s$ compressed Boolean shares to 0.

Vewad wherein shifting a first arithmetic share of the $n_s$ arithmetic shares by an input mask $\lambda_1$ includes calculating $a^{(0)}{}_A = a^{(0)}{}_A + \lambda_1$ mod q, where $a^{(0)}{}_A$ is the first arithmetic share of the $n_s$ arithmetic shares and $q$ is a prime modulus.

Various embodiments are described, wherein scaling the shifted first arithmetic share by a value based on a first compression factor $\delta$ and a masking scaling factor $\varphi_1$ and shifting the scaled first arithmetic share by a value based on the masking scaling factor $\varphi_1$ includes calculating $a^{(0)}{}_A = \left( \left\lfloor \frac{2^{\varphi_1 \cdot \delta}}{q} \cdot a^{(0)}{}_A \right\rceil + 2^{\varphi_1 - 1} \right) \bmod 2^{\varphi_1}\delta$ .

Various embodiments are described, wherein scaling second to $n_s$ shares of the $n_s$ shares by a value based on the first compression factor $\delta$ and the masking scaling factor $\varphi_1$ includes calculating

$$a^{(i)}{}_A = \lfloor \frac{2^{\varphi_1 \cdot \delta}}{q} \cdot a^{(i)}{}_A \rceil \bmod 2^{\varphi_1}\delta$$ where $a^{(i)}{}_A$ is the ith arithmetic share of the $n_s$ arithmetic shares.

Various embodiments are described, wherein right shifting the $n_s$ Boolean shares based upon the masking scaling factor $\varphi_1$ and a second compression factor $\varphi_2$ includes calculating: $\overline{a}^{(\cdot)}{}_B = \overline{a}^{(\cdot)}{}_B \gg (\varphi_1 + \varphi_2)$, where $\overline{a}^{(\cdot)}{}_B$ is the $n_s$ Boolean shares.

Various embodiments are described, wherein XORing an output mask $\lambda_2$ to the shifted first Boolean share to produce $n_s$ compressed Boolean shares includes calculating: $\overline{a}^{(0)}{}_B = \overline{a}^{(0)}{}_B \oplus \lambda_2$.

## BRIEF DESCRIPTION OF THE DRAWINGS

In order to better understand various exemplary embodiments, reference is made to the accompanying drawings, wherein:

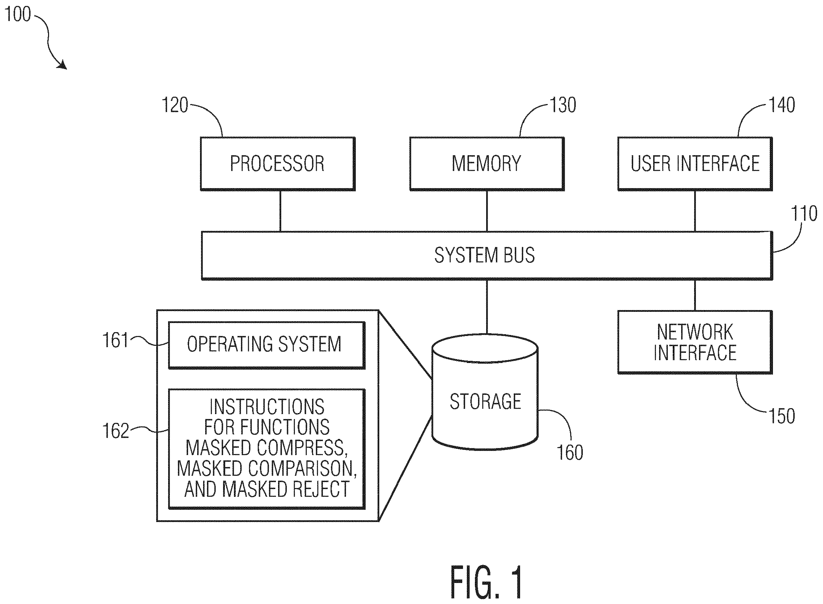

FIG. 1 illustrates an exemplary hardware diagram for implementing polynomial rejection by using masked compressed comparison by using the functions MaskedCompress, MaskedComparison, and MaskedReject..

To facilitate understanding, identical reference numerals have been used to designate elements having substantially the same or similar structure and/or substantially the same or similar function.

## DETAILED DESCRIPTION

The description and drawings illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be for pedagogical purposes to aid the reader in understanding the principles of the invention and the concepts contributed by the inventor(s) to furthering the art and are to be construed as being without limitation to such specifically recited examples and conditions. Additionally, the term, "or," as used herein, refers to a non-exclusive or (*i.e.*, and/or), unless otherwise indicated (*e.g.*, "or else" or "or in the alternative"). Also, the various embodiments described herein are not necessarily mutually exclusive, as some embodiments can be combined with one or more other embodiments to form new embodiments.

The signing operation of a digital signature scheme generates a signature for a given message using a secret key. If this secret key was to be leaked, it would invalidate the security properties provided by the scheme. It has been shown that unprotected implementations of post-quantum signature schemes are vulnerable to implementation attacks, e.g., side-channel analysis. In particular, it was demonstrated that the secret key can be extracted from physical measurements of key-dependent parts in the signing operation. For several post-quantum digital signature schemes, the key-dependent operations include the rejection check of polynomials. In the Dilithium protocol in particular, there are two rejection criteria that depend on the sensitive values $z$ and $\tilde{r}$. The check on $z$ prevents a possible leak of secret information when $z$ is made public as part of the signature. The second check on $\tilde{r}$ ensures the correctness of the scheme and, after unmasking this value, simplifies the calculation of the hint $h$ (another part of the signature). Both checks assert that all the coefficients of $z$ and $\tilde{r}$ lie in their respective required bounds. While this rejection check operation is trivial in the unmasked case, a secure implementation of these digital signature schemes requires the integration of dedicated countermeasures for this step.

Masking is a common countermeasure to thwart side-channel analysis and has been utilized for various applications. Besides security, efficiency is also an important aspect when designing a masked algorithm. Important metrics for software implementations of masking are the number of operations and the number of fresh random elements required for the masking scheme.

The first dedicated masking scheme for a lattice-based signature schemes was presented in Gilles Barthe, Sonia Belaïd, Thomas Espitau, Pierre-Alain Fouque, Benjamin Grégoire, Mélissa Rossi, and Mehdi Tibouchi, Masking the GLP lattice-based signature scheme at any order, Advances in Cryptology - EUROCRYPT 2018 - 37th Annual International Conference on the Theory and Applications of Cryptographic Techniques, Tel Aviv, Israel, April 29 - May 3, 2018 Proceedings, Part II (Jesper Buus Nielsen and Vincent Rijmen, eds.), Lecture Notes in Computer Science, vol. 10821, Springer, 2018, pp. 354-384 (Barthe). To reject arithmetically masked polynomials, the authors propose to use Boolean-masked bound checks for each coefficient. To this end, they first convert the arithmetic shares to Boolean shares, before using Boolean-masked addition to check multiple bounds. The intermediate result of the rejection check is kept in shares as well, and only unmasked as the final decision when all coefficients of the input polynomial have been processed. Overall, this approach requires a costly conversion in addition to multiple costly Boolean-masked additions. The same basic approach was also used for masking qTesla in Francois Gérard and Mélissa Rossi, An efficient and provable masked implementation of qtesla, Smart Card Research and Advanced Applications - 18th International Conference, CARDIS 2019, Prague, Czech Republic, November 11-13, 2019, Revised (Sonia Belaïd and Tim Güneysu, eds.), Lecture Notes in Computer Science, vol. 11833, Springer, 2019, pp. 74-91 (Gérard). Further, this approach was slightly optimized for masking Dilithium in Vincent Migliore, Benoit Gérard, Mehdi Tibouchi, and Pierre-Alain Fouque, *Masking dilithium - efficient implementation and side-channel evaluation*, Applied Cryptography and Network Security - 17th International Conference, ACNS 2019, Bogota, Colombia, June 5-7, 2019, Proceedings (Robert H. Deng, Val6rie Gauthier-Umaña, hoa, and Moti Yung, eds.), Lecture Notes in Computer Science, vol. 11464, Springer, 2019, pp. 344-362 (Migliore). Still, all of these solutions require multiple costly Boolean-masked additions.

The existing solutions all follow the same basic approach of computing a bound check with Boolean-masked additions. An alternative way to perform a masked rejection check is proposed, which reduces the problem to a masked compressed comparison as used for some post-quantum Key Exchange Mechanisms. This enables the use of existing masked compressed comparison algorithms for masked rejection checks in digital signature schemes. Overall, the proposed masked compressed comparison provides a technological improvement on the state-of-the-art by enabling a significantly more efficient implementation of a masked polynomial rejection. It improves both the number of operations and of random elements.

First a generalized masked compression will be described. In contrast to the state-of-the-art, the described masked compression approach may adapt its compression range much more precisely, by introducing additional parameters. Secondly, this generalized masked compression is combined with a compressed comparison algorithm to derive a new masked polynomial rejection check, that is much more efficient than the state-of-the-art. It is further noted that this new rejection check may be instantiated with any masked compressed comparison algorithm, *e.g.*, with future solutions that improve over the current state-of-the-art.

The two building blocks of the masked rejection check will first be described before combining them to implement the masked rejection check. The following notation and functions will be described and defined. A Boolean or arithmetically masked variable $x$ is denoted as $x^{(\cdot)}{}_B$ or $x^{(\cdot)}{}_A$ respectively, with $\bigoplus_{i=0}^{n_s-1} x^{(i)B} = x$ or $\sum_{i=0}^{n_s-1} x^{(i)A} = x \bmod q$ respectively, ($n_s$ being the number of shares). Additionally, bold letters are used to refer to polynomials. So, for example, $\boldsymbol{x}_i^{(j)\mathrm{B}}$ is the j-th Boolean share of the i-th coefficient in the polynomial x.

The auxiliary variables and functions used herein are defined as follows.

$q$: Prime modulus. In Dilithium it is equal to $q = 2^{23} - 2^{13} + 1$.

$n_s$: The number of Boolean or arithmetic shares used in the sharing of the secret coefficient. Increasing this value will improve the side-channel security, but also lower the performance of the algorithm.

$\lfloor \cdot \rceil$ : Rounds to the nearest integer.

$\lfloor \cdot \rfloor$ : Rounds to the greatest integer that is not more than the input.

$\lceil \cdot \rceil$ : Rounds to the least integer that is higher or equal to the input.

+/-: The function computes arithmetic addition or subtraction of the inputs. When applied to one arithmetically-shared input and one public input only one share has to be included in the addition or subtraction.

· (Multiplication): The function computes arithmetic multiplication of the inputs. In an arithmetic masking context, if one of the inputs is a constant or a public value, the multiplication operation is applied on each share of the other input independently.

»: The function computes the bit-wise right shift of the input bitstring. In a Boolean masking context, the » operation is applied on each share of the left input independently. ¬: The function computes the bit-wise negation of the input bitstring.

⊕: The function computes the bit-wise XOR of the input bitstrings.

&: The function computes the bit-wise AND of two inputs. In a Boolean masking context, if one of the inputs is a constant or a public value, the & operation is applied on each share of the other input independently.

A2B: This function converts $n_s$ arithmetic shares $x^{(\cdot)A} \in \mathbb{Z}_q^{n_s}$ to $n_s$ Boolean shares $x^{(\cdot)}_B \in \mathbb{F}_{2^\omega}^{n_s}$, which encode the same secret value $x \in \mathbb{Z}_q$.

SecAnd: This is a standard implementation of a masked AND-operation performed on Boolean shares.

SecOR: This is a standard implementation of a masked OR-operation performed on Boolean shares.

The general purpose of a compression algorithm is to map its inputs to a reduced value space. Depending on the use case different behavior or additional properties may be required. A function that compresses values above the high boundary and values below the low boundary to non-zero values, while mapping the inputs in between the high and low boundaries to zero values. The function MaskedCompress illustrated in pseudocode below is a generalization of Algorithm 13 in Tim Fritzmann, Michiel Van Beirendonck, Debapriya Basu Roy, Patrick Karl, Thomas Schamberger, Ingrid Verbauwhede, and Georg Sigl, Masked accelerators and instruction set extensions for post-quantum cryptography, Cryptology ePrint Archive, Report 2021/479, 2021, https://ia.cr/2021 (Michiel). Instead of using only two compression parameters, the algorithm is modified to receive five parameters as input. This allows the compression to be controlled much more precisely and adapt it to the different situations that occur in an implementation of Dilithium. See Table 1 for suitable parameter sets.

The MaskedCompress function takes arithmetically shared values $a^{(\cdot)}_A \bmod q$ and compression parameters $\delta$, $\varphi_1$, $\varphi_2$, $\lambda_1$, $\lambda_2$ as inputs and returns a compressed value in Boolean shares. The parameters $\delta$, $\varphi_1$, $\varphi_2$, $\lambda_1$, $\lambda_2$ provide various bounds used in the compression, where $\lambda_1$ indicates an input mask, $\lambda_2$ indicates an output mask, $\varphi_1$ is a masking scaling factor, $\delta$ is a first compression factor, and $\varphi_2$ is a second compression factor. The output of the MaskedCompress function includes Boolean shared values of the compressed coefficients $\overline{a}^{(\cdot)}_B$.

At line 1 of the MaskedCompress function shifts the value of the first share $a^{(0)}_A$ by input mask $\lambda_1$. At line 2 the value of the first share $a^{(0)}_A$ is divided by $q$ and further scaled by $2^{\varphi_1} \cdot \delta$ and rounded, where $\delta$ is a compression factor. A further offset of $2^{\varphi_1-1}$ is applied to this first share. Line 3 to 5 implement a loop over all of the remaining shares where each share is divided by $q$ and further scaled by $2^{\varphi_1} \cdot \delta$. Lines 1 to 5 compress the range of the share values to a smaller range.

Next, at line 6, the compressed arithmetic shares are converted to Boolean shares using the function $A2B$. Then at line 7, the Boolean shares are bitwise right shifted by $\varphi_1 + \varphi_2$. This effectively offsets the multiplication by $2^{\varphi_1}$ in lines 2 and 4 and the value $\varphi_2$ allows for a more generical implementation of the compression function. At line 8, the output mask $\lambda_2$ is XORed to set the compression exactly to the specified boundaries. Then at line 9, the function MaskedCompress returns the compressed value in Boolean shares $\overline{a}^{(\cdot)}_B$.

**Function** MaskedCompress$(a^{(\cdot)A}, \delta, \varphi_1, \varphi_2, \lambda_1, \lambda_2)$

---

**Input**: 1. An arithmetic sharing $a^{(\cdot)A}$ of a coefficient; and

      2. Parameters for compression $\delta, \varphi_1, \varphi_2, \lambda_1, \lambda_2$.

**Output**: A Boolean sharing of the compressed coefficient $\bar{a}^{(\cdot)B}$.

1: $a^{(0)A} = a^{(0)A} + \lambda_1 \mod q$

2: $a^{(0)A} = (\lfloor \frac{2^{\varphi_1 \cdot \delta}}{q} \cdot a^{(0)A} \rfloor + 2^{\varphi_1 - 1}) \mod 2^{\varphi_1}\delta$

3: **for** $i = 1$ **to** $n_s - 1$ **do**

4:     $a^{(i)A} = \lfloor \frac{2^{\varphi_1 \cdot \delta}}{q} \cdot a^{(i)A} \rfloor \mod 2^{\varphi_1}\delta$

5: **end for**

6: $\bar{a}^{(\cdot)B} = \mathsf{A2B}_{2^{\varphi_1}\delta}(a^{(\cdot)A})$

7: $\bar{a}^{(\cdot)B} = \bar{a}^{(\cdot)B} \gg (\varphi_1 + \varphi_2)$

8: $\bar{a}^{(0)B} = \bar{a}^{(0)B} \oplus \lambda_2$

9: **return** $\bar{a}^{(\cdot)B}$

---

Next the masked compressed comparison function MaskedComparison will be described. The masked rejection approach disclosed herein may be instantiated with any masked compressed comparison algorithm. Therefore, the masked rejection function disclosed herein may benefit from new developments regarding this problem. For now, a masked compressed comparison function will be used based on a recent approach by Jean-Sébastien Coron, Francois Gérard, Simon Montoya, and Rina Zeitoun, High-order polynomial comparison and masking lattice-based encryption, Cryptology ePrint Archive, Report 2021/1615, 2021, https://ia.cr/2021/1615 (Coron). Note that the multiplicative approach from Coron cannot be used (without explicit compression) due to the magnitude of the compression required for the rejection check. Therefore, instead a more generic approach using a dedicated masked compression function is relied upon. The resulting function MaskedComparison is described using pseudocode shown below. The MaskedComparison function receives inputs of an already compressed masked polynomial $\bar{x}^{(\cdot)B}$, a comparison polynomial $x'$, and the bit width w of a polynomial coefficient. The output of the MaskedComparison function is 1 if the input polynomials match and is 0 otherwise. Lines 1 to 3 of the MaskedComparison function loop over each coefficient of the input polynomials and XOR the polynomial coefficients and then negate the value. Then lines 4 through 17 collapse the resulting bits to a single masked comparison bit. As a result, only if the comparison for all coefficients of the polynomial is true, the final bit will be set to 1. Otherwise, 0 will be returned. Line 4 initiates $u^{(\cdot)B}$ that will be used to store the cumulative result of ANDing together the bits of $\bar{x}_i^{(\cdot)B}$. The lines 5 to 7 implement a loop over each of the coefficients of the polynomials to use the SecAND function to AND the coefficient values together. Here the negation function and SecAND function are used to implement a secure AND function, which is commonly the way a secure OR function SecOR is implemented. Alternatively, a SecOR function could be used as well.

At line 8 the value $m$ is determined to identify the number of combining iterations that are needed to collapse the bits together in half with each iteration. This is faster than the alternative approach that may be used that just loops through each of the bits one at a time. Then at lines 9 to 12 initiates $v^{(\cdot)B}$ that will be used to store the cumulative result of ANDing together the bits of $u^{(\cdot)B}$. Finally, lines 13 to 17 combine the bits of $u^{(\cdot)B}$ together by combining one half of the remaining bits together with each iteration until a single bit results.

---

**Function** $\mathrm{MaskedComparison}(\bar{x}^{(\cdot)B}, x', w)$

---

**Input**: 1. A Boolean sharing $\bar{x}^{(\cdot)B}$ of a compressed polynomial $\bar{x} \in \mathbb{Z}_q[X]/(X^n + 1)$;

2. A polynomial $x' \in \mathbb{Z}_p[X]/(X^n + 1)$; and

3. Bit width of a polynomial coefficient $w = \lceil \log_2(q) \rceil$.

**Output**: 1 if $\sum_{k=0}^{n_s-1} \bar{x}_i^{(k)\mathrm{B}} = x'_i \bmod 2^{\varphi_1}\delta$ for $0 \le i < n$, 0 otherwise.

1: **for** $i = 0$ **to** $n - 1$ **do**

2:    $\bar{x}_i^{(0)\mathrm{B}} = \neg\bar{x}_i^{(0)\mathrm{B}} \oplus x'_i$

3: **end for**

4: $u^{(\cdot)\mathrm{B}} = \bar{x}_0^{(\cdot)\mathrm{B}}$

5: **for** $i = 1$ **to** $n - 1$ **do**

6:    $u^{(\cdot)\mathrm{B}} = \mathsf{SecAND}(u^{(\cdot)\mathrm{B}}, \bar{x}_i^{(\cdot)\mathrm{B}})$

7: **end for**

8: $m = \lceil log_2 w \rceil$

9: $v^{(0)B} = \neg u^{(0)B} \vee (2^{2^m} - 2^w)$          $\triangleright v^{(\cdot)B} \in \{0,1\}^{2^m}$

10: **for** $i = 1$ **to** $n_s - 1$ **do**

11:    $v^{(i)B} = u^{(i)B}$

12: **end for**

13: **for** $i = m - 1$ **to** $0$ **do**

14:    $g^{(\cdot)B} = v^{(\cdot)B} \gg 2^i$

15:    $\mathsf{Refresh}(g^{(\cdot)B})$

16:    $v^{(\cdot)B} = \mathsf{SecAND}(v^{(\cdot)B}, g^{(\cdot)B}) \bmod 2^{2^i}$

17: **end for**

18: **return** $v^{(\cdot)B}$

---

The signing procedure of Dilithium includes several bound checks to ensure that the signature does not leak sensitive information. Two of those checks ($\|z\|_\infty < \gamma_1 - \beta$, $\|\tilde{r}\|_\infty < \gamma_2 - \beta$) are performed on secret values $z$ and $\tilde{r}$ and have to be masked. The values $\gamma_1$, $\gamma_2$, $\beta$ are public parameters of the signature scheme. The general idea is to compress the value space for the coefficients of $z$ and $\tilde{r}$ in such a way that all the valid accepted values get mapped to 0, while all other values get mapped to other non-zero values. This way the bound checks are reduced to a comparison with zero.

In general, the particular parameter values depend on the modulus $q$, the valid accepted coefficient range $(-\lambda, \lambda)$, and the security level. An overview of the values for the rejection bound $\lambda$ and the corresponding parameter values for all possible situations that can occur in an implementation of Dilithium are provided in Table 1.

Table 1. Possible values for the compression parameters $\delta$, $\varphi_1$, $\varphi_2$, $\lambda_1$, $\lambda_2$, depending on the performed check and security level, and corresponding rejection bound $\lambda$.

| $\tilde{r}$-check | $\lambda$ | $\delta$ | $\varphi_1$ | $\varphi_2$ | $\lambda_1$ | $\lambda_2$ |
|---|---|---|---|---|---|---|
| Level 2 | $2^{17} - 35918$ | 45093 | 14 | 10 | 95061 | 0 |
| Level 3 | $2^{18} - 452$ | 262341 | 15 | 14 | 785058 | 1 |
| Level 5 | $2^{18} - 376$ | 262265 | 10 | 14 | 1308820 | 2 |
| | | | | | | |
| $z$-check | $\lambda$ | $\delta$ | $\varphi_1$ | $\varphi_2$ | $\lambda_1$ | $\lambda_2$ |
| Level 2 | $2^{17} - 78$ | 65511 | 13 | 11 | 392918 | 1 |
| Level 3 | $2^{19} - 196$ | 130993 | 10 | 14 | 524060 | 0 |
| Level 5 | $2^{19} - 120$ | 65487 | 12 | 13 | 524104 | 0 |

The function MaskedReject is described below using pseudocode. MaskedReject uses the functions Masked-Compress and MaskedComparison. The input is an uncompressed, arithmetically shared polynomial $\boldsymbol{x}^{(\cdot)}{}_A$ together with a bound $\lambda$. The output is 1 if the infinity norm of $\boldsymbol{x}^{(\cdot)}{}_A$ is less than the bound $\lambda$. At line 1, MaskedReject calculates the coefficient bit width (for Dilithium this is always $w = 23$). At line 2, the function GetValues performs a look-up of the compression parameters depending on $\lambda$. Table 1 presents an example set of such parameters, but other parameters may be used depending upon the specific cryptographic function being used. An example procedure to find such parameters is described below. The lines 3 to 5 loop over the different coefficients and the MaskedCompress function is applied to each of the coefficients. Finally, at line 6 the arithmetically shared polynomial $\overline{\boldsymbol{x}}^{(\cdot)}{}_B$ is compared to zero using the MaskedComparison function and the output returned.

**Function** MaskedReject ($x^{(\cdot)A}$, $\lambda$)

**Input**: 1. An arithmetic sharing $x^{(\cdot)A}$ of a polynomial $x \in \mathbb{Z}_q[X]/(X^n + 1)$; and

     2. Bound $\lambda$ for the infinity norm of $x^{(\cdot)A}$.

**Output**: 1 if $\|x\|_\infty < \lambda$, 0 otherwise.

1: $w = \lceil log_2\, q \rceil$

2: $(\delta, \varphi_1, \varphi_2, \lambda_1, \lambda_2) = \text{GetValues}(\lambda)$

3: **for** $i = 0$ **to** $n - 1$ **do**

4:      $\bar{x}_i^{(\cdot)B} = \text{MaskedCompress}(x_i^{(\cdot)A}, \delta, \varphi_1, \varphi_2, \lambda_1, \lambda_2)$

5: **end for**

6: **return** $\text{MaskedComparison}(\bar{x}^{(\cdot)B}, \mathbf{0}, w)$

One example of how to find compression parameters is now described. Note that other methods may be used to determine the compression parameters needed for various cryptographic protocols. Given a modulus $q$ and a rejection bound $\lambda$ parameter sets ($\delta$, $\varphi_1$, $\varphi_2$, $\lambda_1$, $\lambda_2$) for the compression may be found. Note that depending on the case, there can be multiple working parameter sets. It is usually advisable to implement one with the smaller parameter values to improve performance.

Starting with $\delta$ and $\varphi_2$, a search is performed to find a function instantiation of

$$f(x, \delta, \varphi_2) = \left( \left\lceil \frac{\delta \cdot x}{q} \right\rceil \mod \delta \right) \gg \varphi_2 \qquad (1)$$

with $x \in \mathbb{Z}_q$ , that maps an input range of size $l = \lambda \cdot 2 - 1$ to the same output value. Note that it can be any input interval mapping to any fixed output value and does not necessarily have to already comply with the desired compression function. To reduce the search space, the range of $\varphi_2$ to [0, $log_2\, q$] and $\delta$ to

$$\left\lceil \frac{q}{l} \cdot 2^{\varphi_2} \right\rceil + [-\delta_1, \delta_1]$$

may be restricted for some small values of $\delta_1$. However, as this restricts the search space, it may result in no solution being found. In that case, it might help to expand the search space again.

After fixing $\delta$ and $\varphi_2$, a search for the offsets ($\lambda_1$, $\lambda_2$) is performed by finding an instantiation of the function

$$f(x, \delta, \varphi_2, \lambda_1, \lambda_2) = \left( \left( \left\lfloor \frac{\delta \cdot (x + \lambda_1)}{q} \right\rfloor \mod \delta \right) \gg \varphi_2 \right) \oplus \lambda_2 \qquad (2)$$

which compresses the inputs $x \in \mathbb{Z}_q$ according to the desired rejection function, i.e., the values in the range are mapped to 0, all others to a values $\neq 0$. The offset $\lambda_2$ is found by setting it to the fixed output value of the previous step, and $\lambda_1$ may be found either by iterating over all possibilities or deriving it from the number of false negatives (non-rejected inputs mapped to $\neq 0$), i.e., set such that it corrects this number to zero false negatives.

The remaining parameter $\varphi_1$ depends on the number of shares and may be found by checking if the masked compression according to the function MaskedCompress computes the expected result for all inputs. The search space may be limited to $[\lceil log_2(n_s \cdot q) \rceil - \varphi_2, \lceil log_2(n_s \cdot q) \rceil]$. However, that might not lead to finding a functional solution. In that case, extending the search space for $\varphi_1$ may be performed.

The countermeasures that result from using the implementation of the rejection of masked polynomial coefficients provide a technological advantage over the prior art by using a MaskedReject function that requires fewer calculations and the generation of fewer random bits than prior implementations. This will allow for lattice based post-quantum cryptography schemes to be implemented in more applications that have limited processing resources.

FIG. 1 illustrates an exemplary hardware diagram 100 for implementing polynomial rejection by using masked compressed comparison by using the functions MaskedCompress, MaskedComparison, and MaskedReject. As illustrated, the device 100 includes a processor 120, memory 130, user interface 140, network interface 150, and storage 160 interconnected via one or more system buses 110. It will be understood that FIG. 1 constitutes, in some respects, an abstraction and that the actual organization of the components of the device 100 may be more complex than illustrated.

The processor 120 may be any hardware device capable of executing instructions stored in memory 130 or storage 160 or otherwise processing data. As such, the processor may include a microprocessor, microcontroller, graphics processing unit (GPU), field programmable gate array (FPGA), application-specific integrated circuit (ASIC), or other similar devices. The processor may be implemented as a secure processor or may include both a secure processor and unsecure processor.

The memory 130 may include various memories such as, for example L1, L2, or L3 cache or system memory. As such, the memory 130 may include static random-access memory (SRAM), dynamic RAM (DRAM), flash memory, read only memory (ROM), or other similar memory devices.

The user interface 140 may include one or more devices for enabling communication with a user as needed. For example, the user interface 140 may include a display, a touch interface, a mouse, and/or a keyboard for receiving user commands. In some embodiments, the user interface 140 may include a command line interface or graphical user interface that may be presented to a remote terminal via the network interface 150.

The network interface 150 may include one or more devices for enabling communication with other hardware devices. For example, the network interface 150 may include a network interface card (NIC) configured to communicate according to the Ethernet protocol or other communications protocols, including wireless protocols. Additionally, the network interface 150 may implement a TCP/IP stack for communication according to the TCP/IP protocols. Various alternative or additional hardware or configurations for the network interface 150 will be apparent.

The storage 160 may include one or more machine-readable storage media such as read-only memory (ROM), random-access memory (RAM), magnetic disk storage media, optical storage media, flash-memory devices, or similar storage media. In various embodiments, the storage 160 may store instructions for execution by the processor 120 or data upon with the processor 120 may operate. For example, the storage 160 may store a base operating system 161 for controlling various basic operations of the hardware 100. The storage 162 may include instructions for implementing polynomial rejection by using masked compressed comparison by using the functions MaskedCompress, MaskedComparison, and MaskedReject described above.

It will be apparent that various information described as stored in the storage 160 may be additionally or alternatively stored in the memory 130. In this respect, the memory 130 may also be considered to constitute a "storage device" and the storage 160 may be considered a "memory." Various other arrangements will be apparent. Further, the memory 130 and storage 160 may both be considered to be "non-transitory machine-readable media." As used herein, the term "non-transitory" will be understood to exclude transitory signals but to include all forms of storage, including both volatile and non-volatile memories.

While the host device 100 is shown as including one of each described component, the various components may be duplicated in various embodiments. For example, the processor 120 may include multiple microprocessors that are configured to independently execute the methods described herein or are configured to perform steps or subroutines of the methods described herein such that the multiple processors cooperate to achieve the functionality described herein. Further, where the device 100 is implemented in a cloud computing system, the various hardware components may belong to separate physical systems. For example, the processor 120 may include a first processor in a first server and a second processor in a second server.

As used herein, the term "non-transitory machine-readable storage medium" will be understood to exclude a transitory propagation signal but to include all forms of volatile and non-volatile memory. When software is implemented on a processor, the combination of software and processor becomes a single specific machine. Although the various embodiments have been described in detail, it should be understood that the invention is capable of other embodiments and its details are capable of modifications in various obvious respects.

Because the data processing implementing the present invention is, for the most part, composed of electronic components and circuits known to those skilled in the art, circuit details will not be explained in any greater extent than that considered necessary as illustrated above, for the understanding and appreciation of the underlying concepts of the present invention and in order not to obfuscate or distract from the teachings of the present invention.

Although the invention is described herein with reference to specific embodiments, various modifications and changes can be made without departing from the scope of the present invention as set forth in the claims below. Accordingly, the specification and figures are to be regarded in an illustrative rather than a restrictive sense, and all such modifications are intended to be included within the scope of the present invention. Any benefits, advantages, or solutions to problems that are described herein with regard to specific embodiments are not intended to be construed as a critical, required, or essential feature or element of any or all the claims.

Furthermore, the terms "a" or "an," as used herein, are defined as one or more than one. Also, the use of introductory phrases such as "at least one" and "one or more" in the claims should not be construed to imply that the introduction of another claim element by the indefinite articles "a" or "an" limits any particular claim containing such introduced claim element to inventions containing only one such element, even when the same claim includes the introductory phrases "one or more" or "at least one" and indefinite articles such as "a" or "an." The same holds true for the use of definite articles.

Unless stated otherwise, terms such as "first" and "second" are used to arbitrarily distinguish between the elements such terms describe. Thus, these terms are not necessarily intended to indicate temporal or other prioritization of such elements.

Any combination of specific software running on a processor to implement the embodiments of the invention, constitute a specific dedicated machine.

It should be appreciated by those skilled in the art that any block diagrams herein represent conceptual views of illustrative circuitry embodying the principles of the invention.

**Claims**

1. A data processing system comprising instructions embodied in a non-transitory computer readable medium, the instructions for a cryptographic operation using masked compressing of coefficients of a polynomial having $n_s$ arithmetic shares for lattice-based cryptography in a processor, the instructions, comprising:

   shifting a first arithmetic share of the $n_s$ arithmetic shares by an input mask $\lambda_1$;
   scaling the shifted first arithmetic share by a value based on a first compression factor $\delta$ and a masking scaling factor $\varphi_1$;
   shifting the scaled first arithmetic share by a value based on the masking scaling factor $\varphi_1$;
   scaling a second to $n_s$ shares of the $n_s$ arithmetic shares by a value based on the first compression factor $\delta$ and the masking scaling factor $\varphi_1$;
   converting the $n_s$ scaled arithmetic shares to $n_s$ Boolean shares;
   right shifting the $n_s$ Boolean shares based upon the masking scaling factor $\varphi_1$ and a second compression factor $\varphi_2$;
   XORing an output mask $\lambda_2$ with the shifted first Boolean share to produce $n_s$ compressed Boolean shares; and
   carrying out a cryptographic operation using the $n_s$ arithmetic shares when the $n_s$ compressed Boolean shares indicates that the coefficients of the polynomial are within boundary values.

2. The data processing system of claim 1, further comprising performing a masked comparison function on the $n_s$ compressed Boolean shares configured to indicate that the coefficients of the polynomial are within boundary values.

3. The data processing system of claim 2, wherein

the compressed polynomial coefficients corresponding to the $n_s$ compressed Boolean shares having a value in a valid range of values have a value of 0, and

the masked comparison function compares the $n_s$ compressed Boolean shares to 0.

4. The data processing system of any preceding claim, wherein shifting a first arithmetic share of the $n_s$ arithmetic shares by an input mask $\lambda_1$ includes calculating

$$a^{(0)A} = a^{(0)A} + \lambda_1 \bmod q,$$

where $a^{(0)}{}_A$ is the first arithmetic share of the $n_s$ arithmetic shares and $q$ is a prime modulus.

5. The data processing system of claim 4, wherein scaling the shifted first arithmetic share by a value based on a first compression factor $\delta$ and a masking scaling factor $\varphi_1$ and shifting the scaled first arithmetic share by a value based on a masking scaling factor $\varphi_1$ includes calculating

$$a^{(0)A} = \left( \left\lfloor \frac{2^{\varphi_1} \cdot \delta}{q} \cdot a^{(0)A} \right\rceil + 2^{\varphi_1 - 1} \right) \bmod 2^{\varphi_1} \delta.$$

6. The data processing system of claim 5, wherein scaling second to $n_s$ shares of the $n_s$ shares by a value based on the first compression factor $\delta$ and the masking scaling factor $\varphi_1$ includes calculating

$$a^{(i)A} = \lfloor \frac{2^{\varphi_1} \cdot \delta}{q} \cdot a^{(i)A} \rfloor \bmod 2^{\varphi_1} \delta$$

where $a^{(i)}{}_A$ is the i$^{\text{th}}$ arithmetic share of the $n_s$ arithmetic shares.

7. The data processing system of claim 6, wherein right shifting the $n_s$ Boolean shares based upon the masking scaling factor $\varphi_1$ and a second compression factor $\varphi_2$ includes calculating:

$$\bar{a}^{(\cdot)B} = \bar{a}^{(\cdot)B} \gg (\varphi_1 + \varphi_2),$$

where $\bar{a}^{(\cdot)}{}_B$ is the $n_s$ Boolean shares.

8. The data processing system of claim 7, wherein XORing an output mask $\lambda_2$ to the shifted first Boolean share to produce $n_s$ compressed Boolean shares includes calculating:

$$\bar{a}^{(0)B} = \bar{a}^{(0)B} \oplus \lambda_2.$$

9. A data processing system comprising instructions embodied in a non-transitory computer readable medium, the instructions for a cryptographic operation using a masked rejection of a polynomial with coefficients having $n_s$ arithmetic shares for lattice-based cryptography in a processor, the instructions, comprising:

generating a $n_s$ arithmetic shares for each coefficient of the polynomial;
performing a masked compression of each coefficient of the polynomial using the $n_s$ arithmetic shares for each coefficient of the polynomial, including:

shifting a first arithmetic share of the $n_s$ arithmetic shares by an input mask $\lambda_1$;
scaling the shifted first arithmetic share by a value based on a first compression factor $\delta$ and a masking scaling factor $\varphi_1$;
shifting the scaled first arithmetic share by a value based on the masking scaling factor $\varphi_1$;
scaling the second to $n_s$ shares of the $n_s$ arithmetic shares by a value based on the first compression factor $\delta$ and the masking scaling factor $\varphi_1$;

converting the $n_s$ scaled arithmetic shares to Boolean shares;
right shifting the $n_s$ Boolean shares based upon the masking scaling factor $\varphi_1$ and a second compression factor $\varphi_2$; and
XORing an output mask $\lambda_2$ to the shifted first Boolean share to produce $n_s$ compressed Boolean shares, wherein the compressed $n_s$ Boolean shares indicate compressed polynomial coefficients having a predetermined value when the polynomial coefficients are within boundary values;

comparing the polynomial coefficients represented by the $n_s$ compressed Boolean shares to the predetermined value; and
carrying out a cryptographic operation using the $n_s$ arithmetic shares when the polynomial coefficients represented by the $n_s$ compressed shares are equal to the predetermined value.

10. The data processing system of claim 9, wherein the predetermined value is 0.

11. The data processing system of claim 9 or 10, wherein

shifting a first arithmetic share of the $n_s$ arithmetic shares by an input mask $\lambda_1$ includes calculating

$$a^{(0)A} = a^{(0)A} + \lambda_1 \bmod q,$$

where $a^{(0)}_A$ is the first arithmetic share of the $n_s$ arithmetic shares and $q$ is a prime modulus,
scaling the shifted first arithmetic share by a value based on a first compression factor $\delta$ and a masking scaling factor $\varphi_1$ and shifting the scaled first arithmetic share by a value based on the masking scaling factor $\varphi_1$ includes calculating

$$a^{(0)A} = \left( \left\lfloor \frac{2^{\varphi_1} \cdot \delta}{q} \cdot a^{(0)A} \right\rfloor + 2^{\varphi_1 - 1} \right) \bmod 2^{\varphi_1}\delta,$$

scaling second to $n_s$ shares of the $n_s$ arithmetic shares by a value based on the first compression factor $\delta$ and the masking scaling factor $\varphi_1$ includes calculating

$$a^{(i)A} = \left\lfloor \frac{2^{\varphi_1} \cdot \delta}{q} \cdot a^{(i)A} \right\rfloor \bmod 2^{\varphi_1}\delta$$

where $a^{(i)}_A$ is the ith arithmetic share of the $n_s$ arithmetic shares,
right shifting the $n_s$ Boolean shares based upon the masking scaling factor $\varphi_1$ and a second compression factor $\varphi_2$ includes calculating:

$$\bar{a}^{(\cdot)B} = \bar{a}^{(\cdot)B} \gg (\varphi_1 + \varphi_2),$$

where $\bar{a}^{(\cdot)}_B$ is the $n_s$ Boolean shares, and
XORing an output mask $\lambda_2$ to the shifted first Boolean share to produce $n_s$ compressed Boolean shares includes calculating:

$$\bar{a}^{(0)B} = \bar{a}^{(0)B} \oplus \lambda_2.$$

12. A method for a cryptographic operation using masked compressing of coefficients of a polynomial having $n_s$ arithmetic shares for lattice-based cryptography, comprising:

shifting a first arithmetic share of the $n_s$ arithmetic shares by an input mask $\lambda_1$;
scaling the shifted first arithmetic share by a value based on a first compression factor $\delta$ and a masking scaling factor $\varphi_1$;

shifting the scaled first arithmetic share by a value based on the masking scaling factor $\varphi_1$;

scaling a second to $n_s$ shares of the $n_s$ arithmetic shares by a value based on the first compression factor $\delta$ and the masking scaling factor $\varphi_1$;

converting the $n_s$ scaled arithmetic shares to $n_s$ Boolean shares;

right shifting the $n_s$ Boolean shares based upon the masking scaling factor $\varphi_1$ and a second compression factor $\varphi_2$;

XORing an output mask $\lambda_2$ to the shifted first Boolean share to produce $n_s$ compressed Boolean shares; and

carrying out a cryptographic operation using the $n_s$ arithmetic shares when the $n_s$ compressed Boolean shares indicates that the coefficients of the polynomial are within boundary values.

13. The method of claim 12, further comprising performing a masked comparison function on the $n_s$ compressed Boolean shares configured to indicate that the coefficients of the polynomial are within boundary values.

14. The method of claim 13, wherein

the compressed polynomial coefficients corresponding to the $n_s$ compressed Boolean shares having a value in a valid range of values have a value of 0, and

the masked comparison function compares the $n_s$ compressed Boolean shares to 0.

15. The method of any one of claims 12 to 14, wherein shifting a first arithmetic share of the $n_s$ arithmetic shares by an input mask $\lambda_1$ includes calculating

$$a^{(0)A} = a^{(0)A} + \lambda_1 \bmod q,$$

where $a^{(0)}{}_A$ is the first arithmetic share of the $n_s$ arithmetic shares and $q$ is a prime modulus.

FIG. 1

Europäisches
Patentamt

European
Patent Office

Office européen
des brevets

# EUROPEAN SEARCH REPORT

Application Number

EP 23 19 8828

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MIGLIORE VINCENT ET AL: "Masking Dilithium", 29 May 2019 (2019-05-29), TOPICS IN CRYPTOLOGY – CT-RSA 2020 : THE CRYPTOGRAPHERS' TRACK AT THE RSA CONFERENCE 2020, SAN FRANCISCO, CA, USA, FEBRUARY 24-28, 2020, CORNELL UNIVERSITY LIBRARY, 201 OLIN LIBRARY CORNELL UNIVERSITY ITHACA, NY 14853, PAGE(S) 344 – 362, XP047547656, [retrieved on 2019-05-29] * sections 5.2, 5.3.3, 5.4.2 * ----- | 1-15 | INV.<br>H04L9/00<br>H04L9/30<br>H04L9/32 |
| A | TIM FRITZMANN ET AL: "Masked Accelerators and Instruction Set Extensions for Post-Quantum Cryptography", IACR, INTERNATIONAL ASSOCIATION FOR CRYPTOLOGIC RESEARCH , vol. 20210415:201027 15 April 2021 (2021-04-15), pages 1-47, XP061058976, Retrieved from the Internet: URL:https://eprint.iacr.org/2021/479.pdf [retrieved on 2021-04-15] * section 2.2, Algorithm 13 * ----- | 1-15 | |
| A | LEO DUCAS ET AL: "CRYSTALS — Dilithium: Digital Signatures from Module Lattices", IACR, INTERNATIONAL ASSOCIATION FOR CRYPTOLOGIC RESEARCH , vol. 20170627:201152 26 June 2017 (2017-06-26), pages 1-17, XP061023727, Retrieved from the Internet: URL:http://eprint.iacr.org/2017/633.pdf [retrieved on 2017-06-26] * Algorithm 9 * ----- | 1-15 | |

**TECHNICAL FIELDS SEARCHED (IPC)**

H04L

The present search report has been drawn up for all claims

| Place of search | Date of completion of the search | Examiner |
|---|---|---|
| Munich | 15 February 2024 | Yamajako-Anzala, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...........................................................................................

& : member of the same patent family, corresponding document

EPO FORM 1503 03.82 (P04C01)

2

**EP 4 344 122 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Masking the GLP lattice-based signature scheme at any order. **GILLES BARTHE ; SONIA BELAÏD ; THOMAS ESPITAU ; PIERRE-ALAIN FOUQUE ; BENJAMIN GRÉGOIRE ; MÉLISSA ROSSI ; MEHDI TIBOUCHI.** Advances in Cryptology - EUROCRYPT 2018 - 37th Annual International Conference on the Theory and Applications of Cryptographic Techniques, Tel Aviv, Israel. Springer, 29 April 2018, vol. 10821, 354-384
- An efficient and provable masked implementation of qtesla. **FRANCOIS GÉRARD ; MÉLISSA ROSSI.** Smart Card Research and Advanced Applications - 18th International Conference, CARDIS 2019, Prague, Czech Republic. Springer, 11 November 2019, vol. 11833, 74-91

- **TIM FRITZMANN ; MICHIEL VAN BEIRENDONCK ; DEBAPRIYA BASU ROY ; PATRICK KARL ; THOMAS SCHAMBERGER ; INGRID VERBAUWHEDE ; GEORG SIGL.** Masked accelerators and instruction set extensions for post-quantum cryptography. *Cryptology ePrint Archive, Report 2021,* 2021, 479, https://ia.cr/2021
- **JEAN-SÉBASTIEN CORON ; FRANCOIS GÉRARD ; SIMON MONTOYA ; RINA ZEITOUN.** High-order polynomial comparison and masking lattice-based encryption. *Cryptology ePrint Archive, Report 2021,* 2021, 1615, https://ia.cr/2021/1615